# EUROPEAN PATENT APPLICATION

(11) **EP 0 601 812 A2**
(43) Date of publication of application: **15.06.1994**
(21) Application number: 93309735.4
(22) Date of filing: 03.12.1993
(51) Int. Cl.: A22B 5/00

(54) **An anatomical process**

(30) Priority: 03.12.1992 GB 9225321
(71) Applicant: UNIVERSITY OF BRISTOL, Bristol BS8 1TH (GB)
(72) Inventor: Purnell, Graham Laurence, Clevedon, Avon, BS21 5AS (GB); Crooks, David Alan, Macclesfield, Cheshire, SK11 8NY (GB); Khodabandehloo, Koorosh, Bishopston, Bristol, BS7 8EW (GB)
(74) Representative: Hogg, Jeffery Keith

(57) **Abstract**

A connective tissue cutting tool (12) is guided along the spine of a carcass from the caudal end towards the diaphragm (9) to sever the connective tissue holding internal organs to the spine. The cutting tool (12) is, i) guided along a predetermined path which is scaled according to at least one external dimension of the carcass, ii) resiliently loaded against the spine, iii) produces a force feedback signal to modify the path of the cutting tool whilst following the path. The cutting tool (12) incorporates sensor means (28) to sense the presence of the diaphragm (9), this being used to record the position of the diaphragm for subsequent use in cutting the diaphragm and to trigger predetermined controlled movements of the cutting tool (12) to assist it in passing through an opening which it forms in the diaphragm (9). A separate diaphragm cutting tool (30) is located relative to said aperture by reference to the recording of the position of the diaphragm (9). The connective tissue cutting tool (12) has tissue gathering fingers (26), and the diaphragm cutting tool (30) has a hilt guard (56) to space the blade from the carcass wall.

## Description

### Technical Field

This invention relates to evisceration that is, both processes and equipment for the removal of the internal organs of an animal prior to butchery of the carcass.

The conventional evisceration process used for pigs in the United Kingdom involves hanging the pig head down, removing the sex organs, loosening the rectum, splitting between the hams, opening the belly, splitting the sternum, pulling the rectum and anal passage away from the spine whilst severing the connective tissue so as to progressively free the entrails from the caudal end of the spine towards the diaphragm, cutting either side of the diaphragm, freeing the organs as far as the throat, pulling the organs out, splitting the carcass into two sides, and severing the head. As the organs are disconnected from the spine, they are generally further divided into organ sub-groups consisting of sex organs (male), intestines with stomach, liver with lungs and trachea. Other organs may also be removed individually. This process is carried out manually, and requires skilled personnel.

### Disclosure of the Invention

An object of the present invention is to provide an improved evisceration process and equipment, especially for severing the connective tissue connecting the internal organs to the spine, for cutting the diaphragm, and for removal of organs from the carcass cavity.

According to one aspect, the invention consists in an automated evisceration process in which a connective tissue cutting tool is guided along the spine of a carcass from the caudal end towards the diaphragm to sever the connective tissue holding internal organs to the spine, characterised in that the cutting tool is guided along a predetermined path which is scaled according to at least one an external dimension of the carcass.

Preferably, the external dimension of the carcass employed is its length, possibly as determined by a vision system, and other carcass measurements such as weight or fat may be used as supplementary scaling parameters

Preferably, the cutting tool is resiliently loaded against the spine so that it can ride over undulations in the shape of the spine. Also, sensor means may be provided to sense the contact force between the cutting tool and the spine and to produce a force feedback signal to modify said predetermined path of the cutting tool whilst the tool is following said path.

According to another aspect, the invention consists in an automated evisceration process in which a connective tissue cutting tool is guided along the spine of a carcass from the caudal end towards the diaphragm to sever the connective tissue holding internal organs to the spine, characterised in that the cutting tool incorporates sensor means to sense the presence of the diaphragm and to trigger recording of the position of the diaphragm for subsequent use in cutting the diaphragm.

According to yet another aspect, the invention consists in an automated evisceration process in which a connective tissue cutting tool is guided along the spine of a carcass from the caudal end towards the diaphragm to sever the connective tissue holding internal organs to the spine, characterised in that the cutting tool incorporates sensor means to sense the presence of the diaphragm and thereby trigger predetermined controlled movements of the cutting tool to assist it in passing through an opening which it forms in the diaphragm.

Preferably, the cutting tool cuts through the diaphragm, and continues to sever the connective tissue for a predetermined distance along the spine beyond the diaphragm before being withdrawn through the cut in the diaphragm.

Preferably, once the connective tissue cutting tool is withdrawn through the cut in the diaphragm, a diaphragm cutting tool is inserted into the cut before being moved around the edge of the diaphragm to cut the same, the diaphragm cutting tool being located in said cut by reference to the recorded position of the diaphragm.

According to yet another aspect, the invention consists in a connective tissue cutting tool comprising cutting means and a pair of guide fingers that project forwardly and diverge outwardly away from the cutting means so as to gather tissue in towards the cutting means in use.

Preferably,the cutting means comprises a rotating blade that performs a shearing action.

Preferably, sensor means is incorporated in the cutting tool to sense the presence of a surface, such as a diaphragm.

Preferably, a base skid is provided to assist movement of the cutting tool over the surface of a carcass when the tool is in use.

According to yet another aspect, the invention consists in a diaphragm cutting tool comprising an elongate cutting blade and a holder from which the blade extends, a guard supported by the holder so as to extend laterally from the blade to space the blade away from a carcass wall when cutting a diaphragm attached to the wall.

According to yet another aspect, the invention consists in an automated butchery process in which a diaphragm is cut from a carcass wall by inserting an elongate cutting blade through an aperture in the diaphragm and moving the blade around the periphery of the diaphragm, characterised in that a guard is associated with the blade which extends laterally from the blade and cooperates with the carcass wall to space the blade away from the carcass wall.

### Description of the Drawings

The invention will now be described by way of example with reference to the accompanying drawings in which:
Figure 1 is a schematic diagram showing a series of work stations employed in a pig evisceration process;
Figure 2 is a side view of a pig carcass showing part of an automated evisceration process according to one aspect of the invention;
Figure 3 is a plan view of a connective tissue cutting tool used in the process of Figure 2;
Figure 4 is a side view of the tool of Figure 3;
Figure 5 is a rear view of the tool of Figure 3;
Figure 6 to 8 each shows a front view of a pig carcass at a different stage in the process when the tool of Figure 3 penetrates the diaphragm;
Figure 9 is a schematic diagram of a diaphragm cutting tool used in the process of Figure 2;
Figure 10 and 11 each show a side view of a pig carcass with the diaphragm cutting tool at a different stage of the process;
Figure 12 and 13 each show a rotary brush used to clean the chest cavity of the pig carcass and puller bars to finally remove the entrails from the carcass;
Figures 14 shows a fixture to support a pig carcass during the evisceration process;
Figure 15 shows a section along the line 15-15;
Figure 16 is a plan view of an alternative connective tissue cutting tool used in the process of Figure 2;
Figure 17 is a side view of the alternative tool of Figure 16;
Figure 18 is a side view of an alternative diaphragm cutting tool;
Figure 19 is a perspective view of the tool of Figure 18; and
Figure 20 is a diagram of a pig carcass showing the tool of Figures 18 and 19 in use.

### Mode of Carrying out the Invention

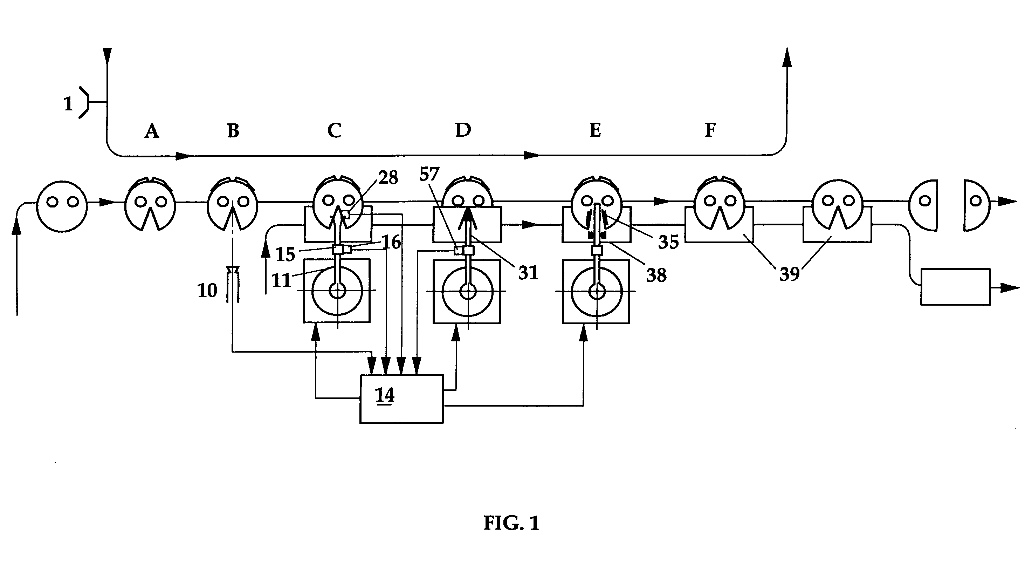

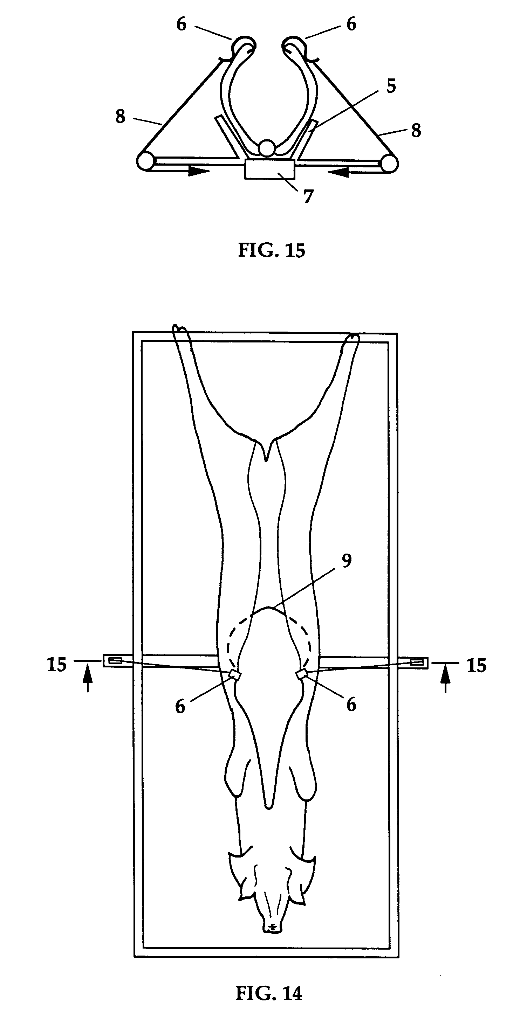

The evisceration process takes place in a number of stages at a succession of work stations A to F as shown in Figure 1. Pig carcasses are conveyed in support fixtures 1 between these respective stations for processing. Each pig carcass, before being loaded into a support fixture 1, is cleaned and dehaired, has a rectum plug 4 inserted, has sex organs removed (if appropriate) has the rectum 2 loosened from between the hams, is split between the hams and has the pubic bone separated, and is split down the belly and sternum. Each carcass is loaded head down into a support fixture 1 at a loading station A as shown in Figures 14 and 15. The hind legs are spread apart by a standard gambrel. The rib-cage is opened out and the carcass pulled back against spine supports 5 in the fixture by a pair of sternum hooks 6 which are each hooked over the edge of a respective half of the sternum to pull them apart through a tensioning mechanism 7 connected to the hooks by wires 8. Each hook 6 engages the split edge of the respective sternum half and is pulled upwards into engagement into the cranial side of the diaphragm 9 where it joins the sternurn. The rectum plug 4 is then fixed to a holding mechanism located on the fixture.

The fixture 1 is then moved on to a scanning station B where a two dimensional visual scanner 10 assesses particular features of the carcass relevant to the subsequent butchery processes. These features comprise the length of the carcass, the location of the 'V' formed between the rectum 2 and the caudal vertebrae 3, and the positions of the sternum hooks 6.

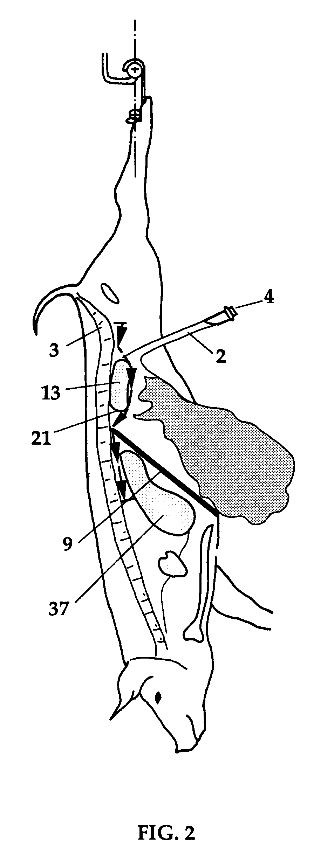

The fixture 1 is then moved on to a connective tissue cutting station C where a connective tissue cutting tool 12 mounted at the end of a robot arm 11, is moved under the control of a controller 14, down the spine of the carcass within the cavity to free internal organs from the spine. This process is illustrated in Figure 2 which shows the path of the cutting tool 12, marked by arrows. The cut begins at the position of the 'V' between the rectum 2 and the caudal vertebrae 3 as identified by the scanner 10, and passes over the kidneys 13 and along the spine as far as the diaphragm 9. Once past the kidneys, the tool is tilted forwards in towards the spine and then backwards so that the tool engages the spine. This movement ensures that the kidney tab 21 is cut and that the cutting process thereafter closely follows the spine. During this whole cutting process, the rectum plug 4 is released from the holding mechanism so that the internal organs can fall forwards out of the cavity, thereby further assisting the cutting action.

The path of the cutting tool 12 and its orientation along this cutting path is based on an average or typical path as determined by the measurement of a plurality of carcasses, and this average path is scaled according to the length of the carcass determined by the scanner 10. An algorithm corresponding to this average path is stored in the controller 14, and is scaled by the carcass length measurement supplied to the controller by the scanner 10.

The robot arm 11 incorporates resilient means 15 which allows the cutting tool 12 to be loaded against the spine so that it can ride over undulations of the spine and kidneys 13 without damaging them. Furthermore, a transducer 16 is provided to sense the contact force between the cutting tool 12 and the spine and produce a corresponding force feedback signal which is supplied to the controller 14. This force feedback signal indicates to the controller when the cutting tool 12 is in contact with the spine in the start position and triggers movement of the cutting tool 12 along its predetermined cutting path.

The force feedback signal from the transducer 16 also serves to modify said predetermined cutting path whilst the tool follows said path. That is, the controller 14 monitors the force feedback signal for variations consistent with a mismatch of the shape of the carcass with said predetermined path, and adjusts said predetermined path accordingly. This adjustment process is necessarily a predictive process to match said predetermined path to the particular carcass, because the speed of movement of the cutting tool along this path prevents instantaneous path matching at the actual location of the cutting tool at any moment in time.

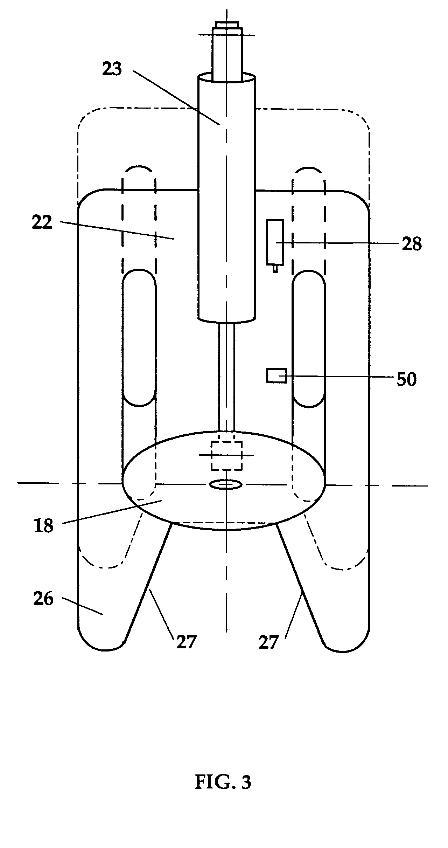

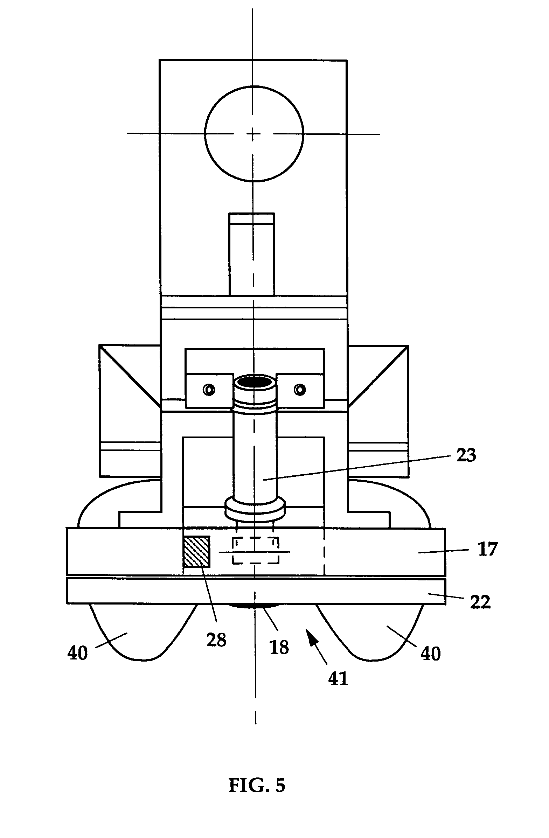

The cutting tool 12 is illustrated in Figure 3 to 5 and comprises a base 17 on top of which is mounted a rotary cutting blade 18 which is inclined downwards in the forward direction so as to overhang the leading edge of the base. The blade 18 is carried at the lower end of the drive shaft 19 supported by a bracket 20 above the base 17, and a pneumatic motor 21 is mounted on the base 17 to drive the shaft 19.

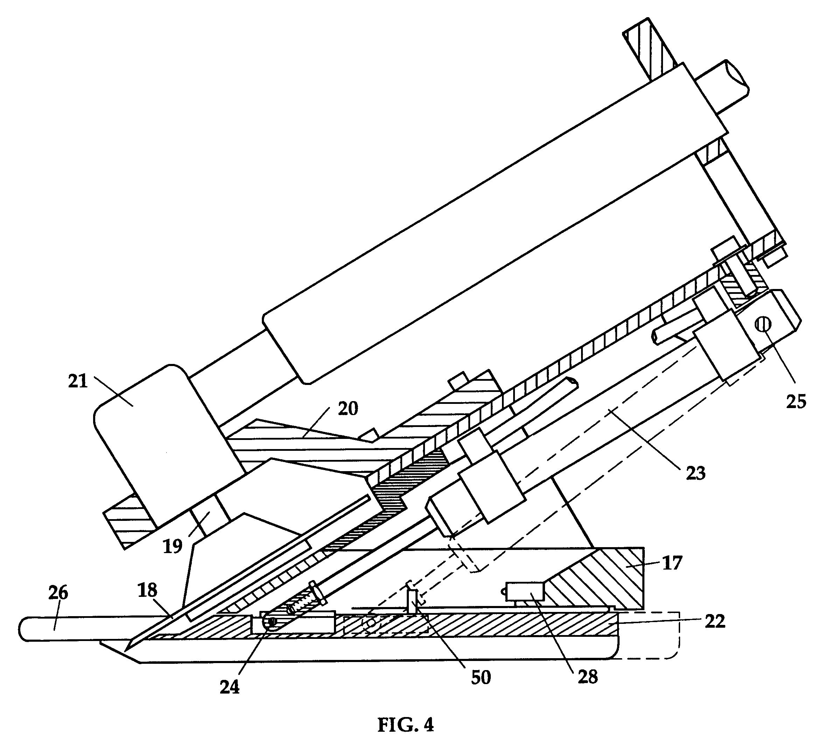

A skid plate 22 is mounted on the underside of the base 17 so that it is longitudinally slidable relative to the base in the forwards and rearwards directions. A pneumatic spring 23 is connected between the skid plate and base on the underside of the base so as to urge the skid plate 22 to a forwardmost position. The spring 23 extends forwards and downwards and is connected by horizontal pivot pins 24,25 at its opposite ends to the skid plate 22 and base 17, respectively. Thus, rearwards movement of the skid plate 22 causes the spring 23 to contract and pivot rearwards about the upper rear pivot pin 25 as shown in broken outline in Figure 4.

The underside of the skid plate 22 is formed with downward projections 40 either side of the cutting blade 18 so as to form a recess 41 therebetween to accommodate the shape of the spine and kidneys 13, thereby facilitating movement of the cutting tool and protecting the carcass against damage. The forward end of the skid plate 22 is shaped, as shown in Figure 3 and 4, so that it has two forwardly extending guide fingers 26, one each side of the cutting blade 18. These guide fingers 26 have inner guide surfaces 27 which diverge outwardly away from the cutting blade 18 so as to gather tissue lying in their path and feed it towards the cutting blade when the skid plate is in its normal forwardmost position.

When the cutting tool reaches the diaphragm 9, the guide fingers 26 engage the diaphragm and are pushed rearwards of the base 17 as the tool continues to be moved forward by the robot arm 11. This rearwards movement of the guide fingers 26 exposes a wider section of the leading edge of the blade 18 which therefore makes a widening cut in the diaphragm until the full width of the leading end of the cutting tool including the guide fingers 26 are able to pass through the cut made in the diaphragm. The skid plate 22 is then extended to its forwardmost position again by the spring 23, and the cutting tool continues along its predetermined path, following the spine and cutting behind the aorta. Typically, the tool continues for a distance of approximately 200 m.m. beyond the diaphragm before it is stopped and withdrawn through the cut in the diaphragm.

A microswitch 28 is mounted on the base 17 to cooperate with a peg 50 on the skid plate 22 when the latter moves rearwards, thereby sensing when the tool engages the diaphragm 9, and producing a diaphragm position signal which is passed to the controller 14 for subsequent use as described hereafter.

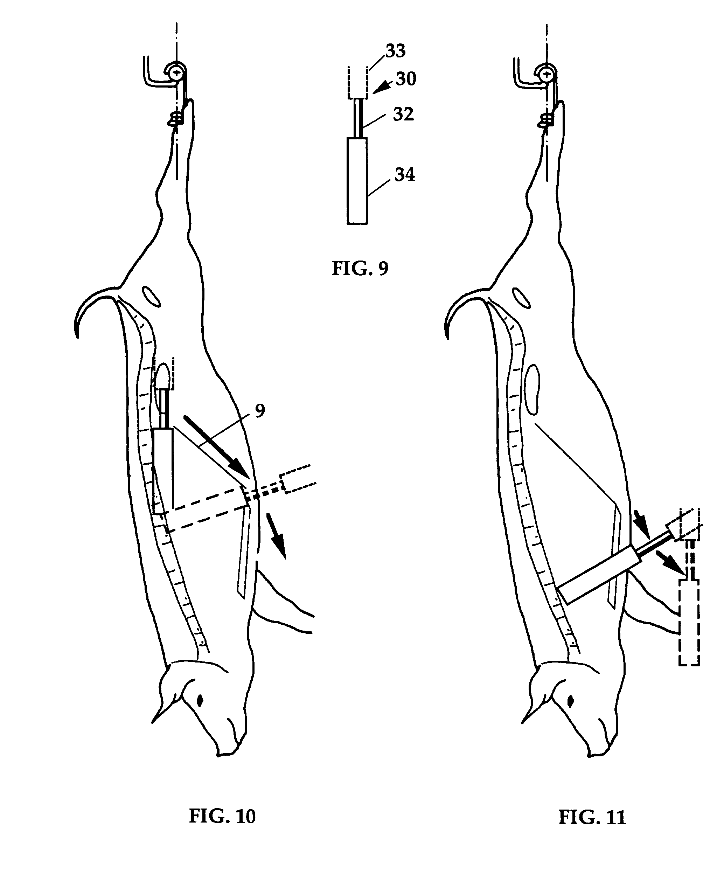

The fixture 1 is then moved on to a diaphragm side cutting station D where a diaphragm cutting tool 30 is operational. This tool is mounted at the end of a robot arm 31 and performs a predetermined cutting operation around the outer periphery of the diaphragm 9 where it joins the rib cage. The tool illustrated in Figure 9 comprises an elongate knife blade 32 supported in a holder 33 at one end which incorporates pneumatic drive means that causes the blade to reciprocate in use. A resilient plastics non-cutting blade 34 is carried at the end of the knife blade 32 so that it lies substantially in the cutting plane of the knife blade 32 and extends beyond the end of the knife blade 32. The purpose of this resilient non-cutting blade 34 will be understood from the following description.

The blades 32,34 of the diaphragm cutting tool 30 are inserted through the cut made in the diaphragm by the connective tissue cutting tool 12, this position having been recorded by the controller 14 when the tool 12 engaged the diaphragm. These blades 32,34 are inserted along the length of the spine to one side of the aorta. The drive of the knife blade is activated and the tool rotated about its tip, as shown in Figure 10, to cut around the periphery of the diaphragm 9 to one side of the spine. As the knife reaches the sternum hook 6 where the diaphragm joins the sternum, this position having being determined by the scanner 10, the whole tool is moved bodily downwards passing the resilient non-cutting blade 34 between the rib cage and the lungs to sever any pleuritic adhesions between the lungs and rib cage. The tool is then swung downwards about the holder 33, as shown in Figure 11, causing the flexible non-cutting blade 34 to make a final sweep through the carcass cavity and exit at the neck.

It will be appreciated that the flexible non-cutting blade 34 flexes to follow the curved inner surface of the rib cage, and is wide enough to move over the undulations in the surface, and is long enough to pass over all of those surfaces requiring severing of pleuritic adhesions.

The same diaphragm cutting tool 30 can be used in two separate operations to cut the diaphragm on both sides of the spine, or two similar tools can be used simultaneously on opposite sides of the spine.

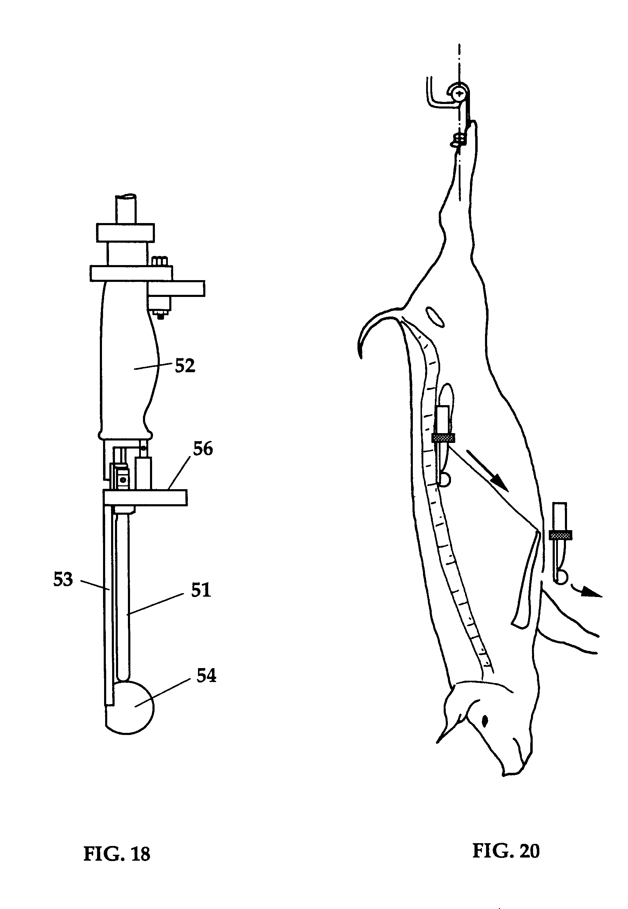

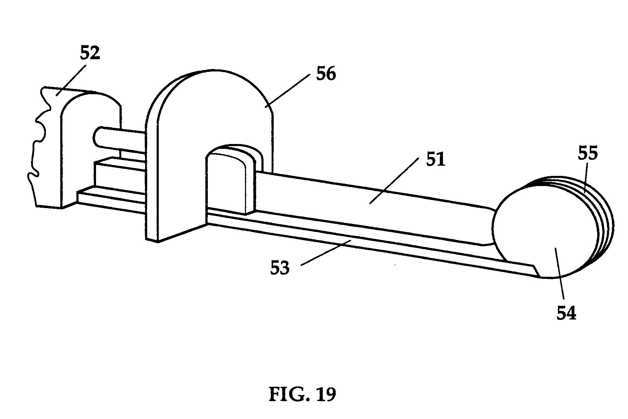

An alternative diaphragm cutting tool is illustrated in Figure 18 and 19 comprises an elongate knife blade 51 supported in a holder 52 at one end which incorporates pneumatic drive means to reciprocate the blade. A support bar 53 extends from the holder 52 alongside the blade 51 and carries at its free end a rounded nose 54 which is disc-shaped in the plane of the blade and is formed with a central slot 55 that receives the end of the blade. A D-shaped hilt guard 56 is mounted on the support bar 53 and the blade 51 projects through it. The flat 57 of the hilt guard is aligned with the back of the support bar 53 so that the blade 51 lies in the centre plane of the D-shape. The rounded periphery of the hilt guard then lies on a substantially constant radius from the cutting edge of the blade.

In use, the blade 51 and support bar 53 are inserted through the cut in the diaphragm 9. The rounded nose 54 serves to protect the tool against snagging on the diaphragm or other internal tissues or organs. The hilt guard 56 is then held against the rib cage, and with this contact maintained, the whole tool is moved around the inside of the rib-cage from the spine towards the sternum, cutting the periphery of the diaphragm of the diaphragm in the process. The hilt guard 56 spaces the cutting edge of the blade 51 away from the rib cage, and thus some of the diaphragm 9 is left attached to the carcass. Because this diaphragm is composed of muscle or meat, the value of the carcass is enhanced by retaining some of it.

The movement of the diaphragm cutting tool is, like before, controlled by the robot arm 31 and controller 14. Preferably, however, a force feedback transducer 57 is incorporated in the robot arm 31 so that the tool can be moved on a path to maintain a constant contact force between the hilt guard 56 and the rib cage.

Figure 20 illustrates how the diaphragm cutting tool is supported in a substantially vertical orientation during the cutting operation so that the blade 51 maintains an angle less than 45 degrees with the diaphragm 9 and exits around and away from the sternum.

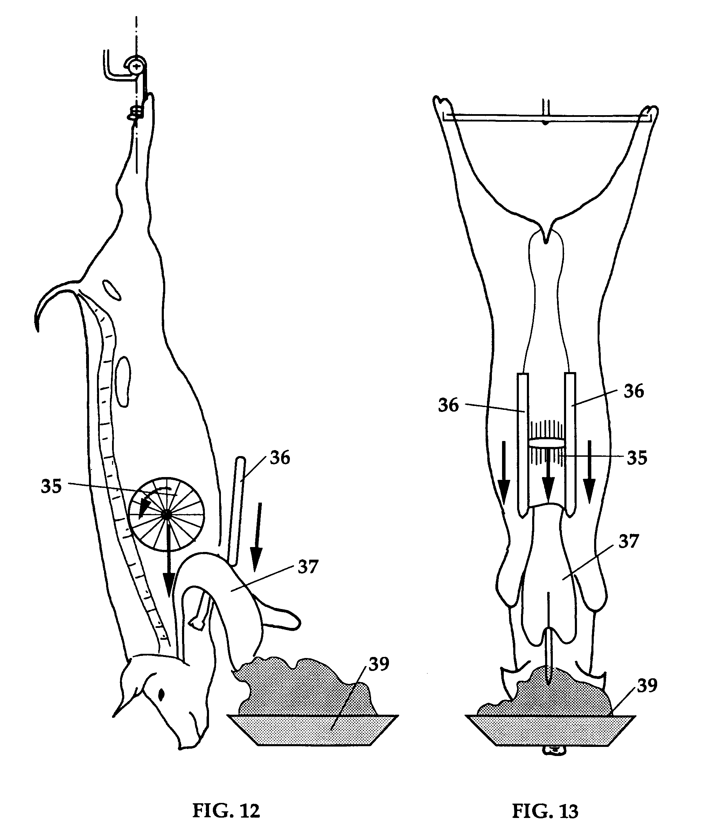

The fixture 1 is now moved on to an organ removal station E where a rotary brush 35 cleans the inside of the carcass and a pair of clamp bars 36 grasp the lungs 37 and pull the organs free from the carcass. The brush 35 is adapted to fit the full width of the carcass cavity and clean all surfaces, the brush having stiff nylon bristles which flex to conform to the shape of the internal surfaces. The brush is moved downwards through the carcass cavity in a single motion by a robot arm 38. The sense of rotation of the brush is such that it helps to push the organs out of the carcass, as shown in Figure 12.

The clamp bars 36 are supported on the robot arm 38 with the brush 35 and are aligned vertically to pass close to the sternum and between the fore-legs of the carcass. The spacing between the clamp bars is sufficient to receive the lungs 37 between them. A pneumatic actuator serves to close the clamp bars together to grasp the lungs, and the bars and brush are then moved downwards and away from the carcass at an angle of approximately 45 degrees to the horizontal to pull the trachea and oesophagus from the neck cavity and deposit the complete set of intestines in a collection vessel 39.

The fixture 1 is then moved on to an unloading station F where the carcass is removed from the fixture 1 together with the intestines. A head cropper is then used to cut the head off the carcass, thereby finally freeing the intestines from the carcass.

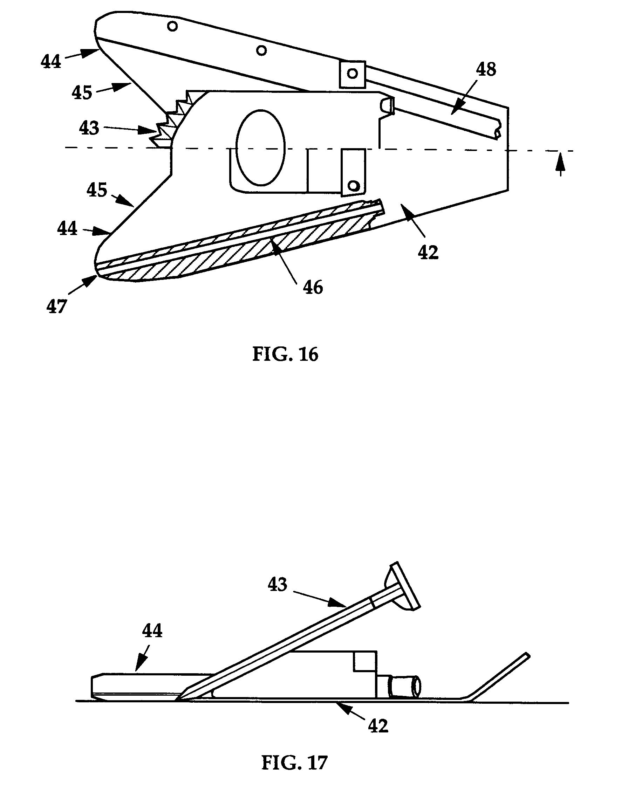

In an alternative embodiment of the invention, the cutting tool of Figures 3 to 5 may be replaced by the cutting tool illustrated in Figures 16 and 17 comprising a skid plate 42 on which is mounted cutting means 43. A pair of guide fingers 44, one each side of the cutting means, project forwardly and have inner guide surfaces 45 which diverge outwardly away from the cutting means so as to gather the tissue lying in their path and feed it towards the cutting means. The cutting means 43 comprises a pair of counter-reciprocating toothed blades which perform a scissoring action. The blades are driven by a pneumatic motor. The blades are inclined downwards relative to the skid plate 42, as shown in Figure 17, for a more effective cutting action.

Pneumatic sensor means is also incorporated in the cutting tool to sense when the tool is close to the diaphragm 9. The sensor means comprises an air passage 46 in each guide finger 44 which opens at a sensing port 47 at the tip of the finger. An air supply 48 is connected to the passages 46 so that air flows from each sensing port 47 and is disturbed by the proximity of the diaphragm 9, causing a back-pressure at the air supply which is detected by pressure sensor. The manner in which this pneumatic sensor is used will now be described.

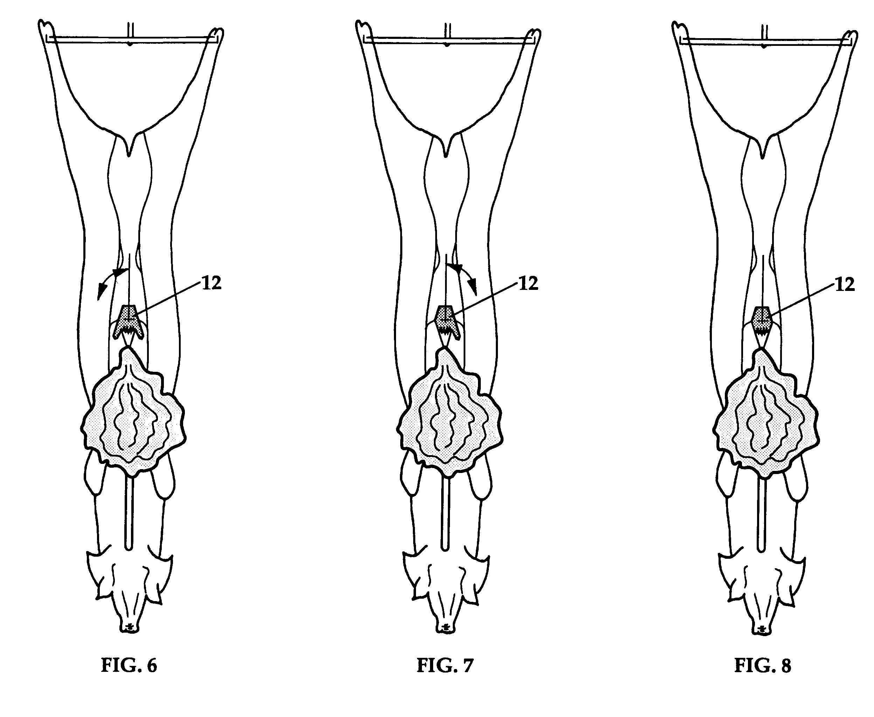

In use, the cutting tool 12 is moved down the spine along a predetermined path as already described above. However, a short distance beyond the kidneys 13, the tips of the guide fingers 44 approach close to the diaphragm, triggering the pneumatic sensor means to stop the tool and record the stop position. At this point, the guide fingers 44 straddle the central ridge of the diaphragm 9 and the blades 43 engage it to form a small cut. This cut is widened by the weight of the intestines hanging forwards. The cutting tool now resumes its downwards movement passing through the cut opened in the diaphragm 9. In order to assist the passage of the tool through the diaphragm cut, the tool performs a programmed movement comprising tilting sideways about a horizontal axis, first one way then the other, as shown in Figures 6 and 7, so as to ensure that each of the guide fingers 44 in turn passes through the cut. The cutting tool can then continue to follow the spine closely to the end of the cut path.

## Claims

1. An automated evisceration process in which a connective tissue cutting tool (12) is guided along the spine of a carcass from the caudal end towards the diaphragm (9) to sever the connective tissue holding internal organs to the spine, characterised in that the cutting tool (12) is guided along a predetermined path (Figure 2) which is scaled according to at least one external dimension of the carcass.

2. A process as claimed in claim 1 in which the cutting tool (12) is resiliently loaded against the spine.

3. A process as claimed in claim 1 or 2 in which the contact force of the tool (12) against the spine is sensed and is used to modify said predetermined path of the cutting tool (12) whilst the tool is following said path.

4. A process as claimed in any one of the preceding claims in which the angular orientation of the cutting tool (12) in a plane of movement through the spine is varied in a predetermined manner.

5. An automated evisceration process in which a connective tissue cutting tool (12) is guided along the spine of a carcass from the caudal end towards the diaphragm (9) to sever the connective tissue holding internal organs to the spine, characterised in that the cutting tool (12) incorporates sensor means (28) to sense the presence of the diaphragm (9) and to trigger recording of the position of the diaphragm for subsequent use in cutting the diaphragm.

6. An automated evisceration process in which a connective tissue cutting tool (12) is guided along the spine of a carcass from the caudal end towards the diaphragm to sever the connective tissue holding internal organs to the spine, characterised in that the cutting tool (12) incorporates sensor means (28) to sense the presence of the diaphragm and thereby trigger predetermined controlled movements of the cutting tool to assist it in passing through an opening which it forms in the diaphragm (9).

7. A process as claimed in claim 5 or 6 in which the cutting tool (12) cuts through the diaphragm (9) and advances to the end of said predetermined path.

8. A process as claimed in claim 7 in which the cutting tool (12) advances a predetermined distance past the diaphragm (9) to the end of said predetermined path.

9. A process as claimed in claim 7 or 8 in which the cutting tool (12) is withdrawn through the aperture that it cuts in the diaphragm (9) in passing along said predetermined path, and a separate diaphragm cutting tool (30) is located relative to said aperture by reference to said recording of the position of the diaphragm.

10. A process as claimed in claim 9 in which the diaphragm cutting tool (30) is inserted through said aperture and is moved laterally of the spine around the periphery of the diaphragm (9).

11. A process as claimed in any one of claims 5 to 10 in which the cutting tool (12) is guided along a predetermined path which is scaled according to at least one external dimension of the carcass.

12. A process as claimed in claim 11 in which the cutting tool (12) is resiliently loaded against the carcass wall.

13. A process as claimed in claim 11 or 12 in which the contact force of the cutting tool (12) against the carcass is sensed and is used to modify said predetermined path of the cutting tool (12) whilst the tool is following said path.

14. A process as claimed in any one of claims 11 to 13 in which the angular orientation of the cutting tool (12) in a plane of movement through the spine is varied in a predetermined manner.

15. A connective tissue cutting tool (12) comprising cutting means (18) and a pair of guide fingers (26) that project forwardly and diverge outwardly away from the cutting means (18) so as to gather tissue in towards the cutting means (18) in use.

16. A tool as claimed in claim 15 in which the cutting means (18) comprises a disc-shaped rotary blade.

17. A tool as claimed in claim 15 or 16 in which each guide finger (26) is resiliently loaded so as to retract into the tool when it engages an obstruction in its path.

18. A tool as claimed in any one of claims 15 to 17 which incorporates sensor means (28) to sense an obstruction in its path.

19. A tool as claimed in claim 18 in which said sensor means (28) is incorporated in one or each of said guide fingers (26).

20. A tool as claimed in claim 19 in which said sensor means (28) comprises pneumatic sensor means.

21. A tool as claimed in any one of claims 15 to 20 which incorporates a base skid (22) to assist movement of the tool over the surface of a carcass.

22. A tool as claimed in claim 21 in which the base skid (22) is shaped so as to incorporate a recess (41) in its lower surface aligned with the cutting means (18) so as to accommodate a projection over which the base skid passes.

23. A diaphragm cutting tool comprising an elongate cutting blade (51) and a holder (52) from which the blade extends, a guard (56) supported by the holder (52) so as to extend laterally from the blade (51) to space the blade away from a carcass wall when cutting a diaphragm (9) attached to the wall.

24. An automated butchery process in which a diaphragm (9) is cut from a carcass wall by inserting an elongate cutting blade (51) through an aperture in the diaphragm (9) and moving the blade around the periphery of the diaphragm, characterised in that a guard (56) is associated with the blade (51) which extends laterally from the blade (51) and cooperates with the carcass wall to space the blade away from the carcass wall.
